# EUROPEAN PATENT APPLICATION

(11) **EP 4 610 536 A1**
(43) Date of publication of application: **03.09.2025**
(21) Application number: 23881747.2
(22) Date of filing: 20.10.2023
(51) Int. Cl.: F16L 37/32, F16L 43/02

(54) **QUICK-SWAP CONNECTOR, QUICK-SWAP CONNECTOR ASSEMBLY, COOLING WATER SYSTEM, AND ELECTRIC VEHICLE**

(30) Priority: 24.10.2022 CN 202222797475 U
(71) Applicant: Nio Battery Technology (Anhui) Co., Ltd., Hefei, Anhui 230601 (CN)
(72) Inventor: WANG, Shuailin, Shanghai 201804 (CN)
(74) Representative: Vossius & Partner Patentanwälte Rechtsanwälte mbB
(86) International application number: PCT/CN2023/125635
(87) International publication number: WO 2024/088169

(57) **Abstract**

The disclosure relates to the technical field of new energy vehicles, and particularly provides a quick-swap connector, a quick-swap connector assembly, a cooling water system, and an electric vehicle, which are intended to solve the problem in the prior art of the generation of a large flow resistance when cooling water passes through the quick-swap connector assembly due to size limitations. To this end, the quick-swap connector of the disclosure includes: a first valve body, provided with a first flow passage port, a first flow passage channel in communication with the first flow passage port being provided in the first valve body; and a first valve core, movably arranged in the first flow passage channel, the first valve core being sealingly engaged with or disengaged from the first valve body by means of movement, wherein the first valve body has an outer diameter of D11, and the first valve core has an outer diameter of P1, where D11/P1 has a value in the range of 1.55 to 1.74. In the quick-swap connector of the disclosure, by adjusting the size relationship between the first valve body and the first valve core, under the condition of size limitations, the flow resistance of the cooling water is made smaller when flowing through the first valve body, thereby taking both the size and the flow resistance into consideration and improving the heat dissipation efficiency.

## Description

### Cross Reference to Related Application

The disclosure claims priority to Chinese Patent Application No. CN 202222797475.0, filed on October 24, 2022 and entitled "QUICK-SWAP CONNECTOR, QUICK-SWAP CONNECTOR ASSEMBLY, COOLING WATER SYSTEM, AND ELECTRIC VEHICLE", which is incorporated herein by reference in its entirety.

### Technical Field

The disclosure relates to the technical field of new energy vehicles, and particularly provides a quick-swap connector, a quick-swap connector assembly, a cooling water system, and an electric vehicle.

### Background Art

At present, there are mainly two modes of energy replenishment for a battery electric vehicle, namely, vehicle charging and battery swap. In the replenishment mode of battery swap, it is necessary to couple or decouple a cooling water pipeline on a battery to or from a cooling water pipeline on a vehicle, and in order to facilitate swap, a quick-swap connector assembly is generally provided on the cooling water pipeline of the battery and on the cooling water pipeline of the vehicle, to achieve quick coupling and decoupling by means of the quick-swap connector assembly.

In order to prevent leakage of cooling water, a valve body and a valve core are generally provided inside the quick-swap connector assembly, and a flow passage is provided in the valve body. When the battery is mounted to the vehicle and the cooling water pipelines are coupled to each other, the valve core is separated from the valve body, allowing communication between the cooling water pipelines of the battery and the vehicle. When the battery is removed from the vehicle, the cooling water pipelines are decoupled from each other, the valve core is sealingly engaged with the valve body, preventing leakage of the cooling water.

However, in existing quick-swap connector assemblies, the size of the quick-swap connector assembly needs to be limited due to limited assembly space. The size limitations will inevitably affect the flow resistance generated when the cooling water passes through the quick-swap connector assembly. Therefore, how to optimize the valve body and the valve core of the quick-swap assembly under the condition of size limitations to reduce the flow resistance is an urgent problem to be solved in the art.

### Summary

The disclosure is intended to solve the above technical problem, that is, to solve the existing problem of a large flow resistance of cooling water when passing through a quick-swap connector assembly due to size limitations.

According to a first aspect of the disclosure, there is disclosed a quick-swap connector, including: a first valve body, the first valve body being provided with a first flow passage port, and a first flow passage channel in communication with the first flow passage port being provided in the first valve body; and a first valve core, the first valve core being movably arranged in the first flow passage channel, and the first valve core being sealingly engaged with or disengaged from the first valve body by means of movement, to close or open the first flow passage port, wherein the first valve body has an outer diameter of D11, the first valve core has an outer diameter of P1, and D11/P1 has a value in the range of 1.55 to 1.74.

Further, the first valve body has an inner diameter of D21, where D21/P1 has a value in the range of 1.3 to 1.4.

Further, the first flow passage port has an inner diameter of Q1, where Q1/P1 has a value in the range of 1.02 to 1.03.

Further, two first valve bodies are provided, the two first valve bodies being spaced apart from each other, one first valve core is arranged in each of the first valve bodies, and a distance between two adjacent first valve cores is defined as S, where P1/S has a value in the range of 0.24 to 0.32.

Further, the first valve core has a first position in which the first flow passage port is closed and a second position in which the first flow passage port is opened; and the first valve core moves from the second position to the first position by a distance X, where P1/X has a value in the range of 0.75 to 1.07.

Further, the outer diameter P1 of the first valve core has a size range of 11.9 mm to 15.9 mm.

According to a second aspect of the disclosure, there is also disclosed a quick-swap connector assembly, including the quick-swap connector described above.

Further, the quick-swap connector assembly further includes: a second valve body, the second valve body being in plug-in engagement with the first valve body; a collar, the collar being movably arranged in the second valve body, the first valve body abutting against the collar, the collar being provided with a second flow passage port, the second flow passage port being positioned corresponding to the first flow passage port, and the collar having a second flow passage channel in communication with the second flow passage port; and a second valve core, the second valve core being fixedly arranged in the second valve body, the second valve core running through the second flow passage channel, the second valve core abutting against the first valve core, and the collar being sealingly engaged with or disengaged from the second valve core by means of movement, to close or open the second flow passage port, wherein the second valve core has an outer diameter of P2, where P2/P1 has a value in the range of 0.8 to 1.

Further, the second valve body has a plug-in cavity and a flow passage cavity which are in communication with each other, wherein the plug-in cavity is configured to be in plug-in engagement with the first valve body, the first valve body is located in the plug-in cavity, the collar is arranged in the flow passage cavity, and the plug-in cavity has an inner diameter of D1, where P2/D1 has a value in the range of 0.71 to 0.77.

Further, the second valve body has an outer diameter of D2, where D1/D2 has a value in the range of 0.42 to 0.54.

Further, a chamfer between an inner diameter of the second valve body and the outer diameter of the second valve body has a dimension of M4, where M4 has a value in the range of 10mm to 12 mm.

Further, the second valve body is provided with a plug-in opening, and a plug-in end of the first valve body is inserted into the second valve body through the plug-in opening; the plug-in end of the first valve body has an outer diameter gradually decreasing in a plug-in direction of the first valve body, and an outer peripheral wall of the plug-in end of the first valve body forms a first guide surface; the plug-in opening of the second valve body has an inner diameter gradually increasing in the opposite direction of the plug-in direction of the first valve body, and an inner peripheral wall of the plug-in opening of the second valve body forms a second guide surface; and during plugging of the first valve body into the second valve body, the first guide surface and the second guide surface cooperate with each other to guide the first valve body into the second valve body.

Further, the difference between the minimum outer diameter of the plug-in end of the first valve body and the maximum inner diameter of the plug-in opening of the second valve body is defined as A, where A has a value in the range of 5.5 mm to 9.5 mm.

Further, a plug-in depth of the first valve body into the second valve body is defined as M1, where M1 has a value in the range of 24.5mm to 39 mm.

Further, an annular sleeve is provided on an outer peripheral wall of the first valve body, the annular sleeve being connected to the outer peripheral wall of the first valve body to form a plug-in slot, the first valve body is plugged into the second valve body and at the same time, the second valve body is inserted into the plug-in slot.

Further, the first valve body has an exposed section extending to the outside of the annular sleeve, the exposed section of the first valve body having a length of M2, where M2 has a value in the range of 19.7mm to 39 mm.

Further, the first valve body further has a connecting section connected to the annular sleeve, and an outer surface of the first valve body at the connecting section is connected to the bottom of the plug-in slot; and the connecting section of the first valve body has an outer diameter gradually increasing in a plug-in direction of the second valve body, and the connecting section of the first valve body has a length of M3, where M3 has a value in the range of 6mm to 10 mm.

Further, the annular sleeve has an inner diameter of D3, where D3 has a value in the range of 41mm to 45 mm.

According to a third aspect of the disclosure, there is also disclosed a quick-swap connector, including: a second valve body, the second valve body having a plug-in cavity and a flow passage cavity which are in communication with each other, the second valve body being provided with a plug-in opening, and the plug-in cavity being in communication with the plug-in opening; a collar, the collar being movably arranged in the flow passage cavity, the collar being provided with a second flow passage port, and the collar having a second flow passage channel in communication with the second flow passage port; and a second valve core, the second valve core being fixedly arranged in the second valve body, the second valve core running through the second flow passage channel, and the collar being sealingly engaged with or disengaged from the second valve core by means of movement, to close or open the second flow passage port, wherein the second valve core has an outer diameter of P2, and the plug-in cavity has an inner diameter of D1, where P2/D1 has a value in the range of 0.71 to 0.77.

Further, the second valve body has an outer diameter of D2, where D1/D2 has a value in the range of 0.42 to 0.54.

Further, a chamfer between an inner diameter of the second valve body and the outer diameter of the second valve body has a dimension of M4, where M4 has a value in the range of 10mm to 12 mm.

Further, the second valve core has a maximum outer diameter of P2, where P2 has a size range of 13.8mm to 15.5mm.

According to a fourth aspect of the disclosure, there is also disclosed a quick-swap connector assembly, including the quick-swap connector described above.

According to a fifth aspect of the disclosure, there is also disclosed a cooling water system, including the quick-swap connector assembly described above.

According to a sixth aspect of the disclosure, there is also disclosed an electric vehicle, including the cooling water system described above.

In the quick-swap connector of the disclosure, by adjusting the size relationship between the first valve body and the first valve core, under the condition of size limitations, the flow resistance of the cooling water is made smaller when flowing through the first valve body, thereby taking both the size and the flow resistance into consideration and improving the heat dissipation efficiency.

### Brief Description of the Drawings

Preferred implementations of the disclosure are described below with reference to the accompanying drawings, in which:
FIG. 1 is a schematic structural diagram of a first valve body according to an embodiment of the disclosure;
FIG. 2 is a schematic structural diagram of the first valve body engaged with a second valve body according to an embodiment of the disclosure;
FIG. 3 is a schematic structural diagram of the second valve body according to an embodiment of the disclosure;
FIG. 4 is a schematic structural diagram of the positional relationship of two first valve bodies according to an embodiment of the disclosure; and
FIG. 5 is a schematic structural diagram of two first valve bodies engaged with two second valve bodies according to an embodiment of the disclosure.

### List of reference signs:

10. first valve body; 11. first flow passage port; 12. first flow passage channel; 13. plug-in end; 131. first guide surface; 14. exposed section; 15. connecting section; 20. first valve core; 30. second valve body; 31. plug-in cavity; 32. flow passage cavity; 33. plug-in opening; 331. second guide surface; 40. collar; 41. second flow passage port; 42. second flow passage channel; 50. second valve core; 60. annular sleeve; 61. plug-in slot.

### Detailed Description of Embodiments

The disclosure will be further described below in connection with embodiments, but the scope of protection of the disclosure is not limited to the content of the description.

In order for those skilled in the art to better understand the solutions of the present invention, the technical solutions in the embodiments of the present invention will be clearly and completely described below with reference to the accompanying drawings for the embodiments of the present invention. Apparently, the described embodiments are merely some of, rather than all of, the embodiments of the present invention. All other embodiments obtained by those of ordinary skill in the art based on the embodiments in the present invention without creative effort shall fall within the scope of protection of the present invention.

It should be noted that the terms "second", "first" and the like in the description, the claims and the accompanying drawings of the present invention are used to distinguish similar objects, and are not necessarily used to describe a specific order or sequence. It should be understood that the terms used in this way are interchangeable in proper circumstances, so that the embodiments of the present invention can be clearly described herein. Furthermore, the terms "include" and "have" and any variations thereof are intended to cover non-exclusive inclusions. For example, a process, a method, a system, a product, or a device that includes a series of steps or units is not necessarily limited to those steps or units that are explicitly listed, but may include other steps or units not explicitly listed or inherent to such a process, method, product or device.

It should be noted that, in the description of the disclosure, the terms that indicate the direction or positional relationship, such as "upper", "lower", "left", "right", "inner", and "outer", are based on the direction or positional relationship shown in the accompanying drawings, which is merely for ease of description instead of indicating or implying that the apparatus or element must have a particular orientation and be constructed and operated in a particular orientation, and therefore, should not be construed as limiting the disclosure. In addition, the terms "first" and "second" are used for descriptive purposes only, and cannot be construed as indicating or implying relative importance.

In addition, it should also be noted that, in the description of the disclosure, the terms "mount", "provide" and "connect" should be interpreted in a broad sense unless explicitly defined and limited otherwise, which, for example, may mean a fixed connection, a detachable connection or an integral connection; and may be a direct connection, an indirect connection by means of an intermediary, or internal communication between two elements. For those skilled in the art, the specific meanings of the foregoing terms in the disclosure can be interpreted according to a specific situation.

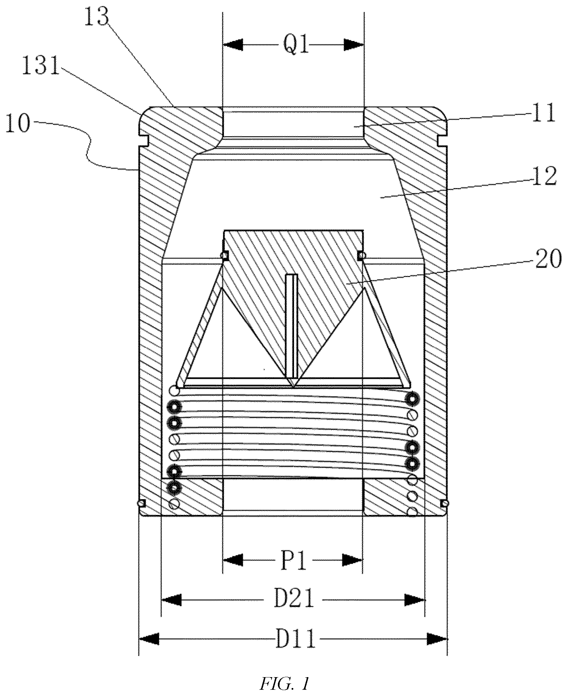

In the embodiment of the disclosure shown in FIG. 1, there is disclosed a quick-swap connector, including a first valve body 10 and a first valve core 20. The first valve body 10 is provided with a first flow passage port 11, and a first flow passage channel 12 in communication with the first flow passage port 11 is provided in the first valve body 10. The first valve core 20 is movably arranged in the first flow passage channel 12, and the first valve core 20 is sealingly engaged with or disengaged from the first valve body 10 by means of movement, to close or open the first flow passage port 11. The first valve body 10 has an outer diameter of D11, and the first valve core 20 has an outer diameter of P1, where D11/P1 has a value in the range of 1.55 to 1.74.

In the quick-swap connector of the disclosure, D11/P1 has a value in the range of 1.55 to 1.74. In this embodiment, D11 is the outer diameter of the first valve body 10, and P1 is the outer diameter of the first valve core 20. Since the first valve core 20 is movably arranged in the first flow passage channel 12, the presence of the first valve core 20 occupies a portion of the space within the first flow passage channel 12, resulting in a reduced flow passage area of cooling water, thereby causing the generation of a flow resistance. Thus, reducing the size of the valve core can increase the flow passage area of the cooling water, thereby reducing the flow resistance. However, since the first valve core 20 needs to be engaged with the first flow passage port 11, if the size of the first valve core 20 is too small, the size of the first flow passage port 11 will be correspondingly reduced, but the too small size of the first flow passage port 11 will in turn lead to an increase in the flow resistance. Therefore, at a reasonable ratio of the two, the quick-swap connector can obtain excellent performance data. The simulation data is as follows:

| D11/P1 | Flow rate lpm | Pressure drop kPa |
|---|---|---|
| 1.52 | 18 | 22.1 |
| 1.55 | 18 | 14.5 |
| 1.63 | 18 | 10.7 |
| 1.74 | 18 | 13.2 |
| 1.80 | 18 | 15.7 |

As can be seen from the simulation data, when the value of D11/P1 is between 1.55 and 1.74, the size ratio of the first valve core 20 to the first valve body 10 is relatively small, and the first valve core occupies a relatively small area of the first flow passage channel 12. Therefore, the pressure drop during passage of the cooling water is relatively small, and the first flow passage port 11 is also relatively large in size, so that the resistance of the cooling water flowing through the first flow passage port 11 is also relatively small, and the overall pressure drop is thus relatively small. When the value of D11/P1 is 1.63, the flow passage area between the first valve core 20 and the first valve body 10 is substantially the same as the flow passage area of the first flow passage port 11, so that the resistance encountered by the cooling water when flowing through the first valve core 20 is substantially the same as the flow resistance encountered by the cooling water when flowing through the first flow passage port 11, and the overall pressure drop is minimized. When D11/P1 decreases to 1.52, the size ratio of the first valve core 20 to the first valve body 10 is too large, resulting in a too small space for the cooling water to flow through the first flow passage channel 12, and the resistance encountered by the cooling water during passage is relatively large. In this case, although the flow passage area of the first flow passage port 11 is greatly increased, the overall pressure drop is also relatively large due to the relatively large flow resistance in the first flow passage channel 12, reaching a non-usable state. When D11/P1 increases to 1.80, the size ratio of the first valve core 20 to the first valve body 10 is too small. Although the space for the cooling water to flow through the first flow passage channel 12 is relatively large and the resistance encountered by the cooling water during passage is small, the flow passage area of the first flow passage port 11 is greatly reduced, resulting in a relatively large flow resistance of the cooling water when flowing through the first flow passage port 11, and a relatively large overall pressure drop, reaching a non-usable state.

In the quick-swap connector of the disclosure, by adjusting the size relationship between the first valve body 10 and the first valve core 20, under the condition of size limitations, the flow resistance of the cooling water is made smaller when flowing through the first valve body 10, thereby taking both the size and the flow resistance into consideration and improving the heat dissipation efficiency. Preferably, the outer diameter P1 of the first valve core 20 has a size range of 11.9 mm to 15.9 mm.

It should be noted that in the above simulation experiment, the thickness of the first valve body 10 is fixed in order to ensure the accuracy of the data. Therefore, as the outer diameter D11 of the first valve body 10 changes, the inner diameter D21 of the first valve body 10 also changes accordingly, and D21/ P1 has a value in the range of 1.3 to 1.4 accordingly.

When the value of D21/P1 is between 1.3 and 1.4, the ratio of the outer diameter of the first valve core 20 to the inner diameter of the first valve body 10 is optimal, and the area of the first flow passage channel 12 occupied by the first valve core 20 is relatively small, and the first flow passage port 11 is also relatively large in size, so that the resistance encountered by the cooling water when flowing through the first flow passage port 11 is also relatively small, and the overall pressure drop is thus small. When D21/P1 decreases to 1.3, the space occupied by the first valve core 20 in the first flow passage channel 12 is too large, resulting in a too small space for the cooling water to flow therethrough, and the resistance encountered by the cooling water during passage is relatively large. In this case, although the flow passage area of the first flow passage port 11 is greatly increased, the overall pressure drop is also relatively large due to the relatively large flow resistance in the first flow passage channel 12, reaching a non-usable state. When the value of D21/P1 is greater than 1.4, it means that the space occupied by the first valve core 20 in the first flow passage channel 12 is very small, and the resistance encountered by the cooling water during passage is relatively small, but the flow passage area of the first flow passage port 11 is greatly reduced accordingly, resulting in an increased flow resistance of the cooling water when flowing through the first flow passage port 11, and a relatively large overall pressure drop, reaching a non-usable state.

The first flow passage port 11 has an inner diameter of Q1, where Q1/P1 has a value in the range of 1.02 to 1.03. By limiting the range of the value of Q1/P1 to 1.02 to 1.03, a movement gap is formed between the first flow passage port 11 and the first valve core 20, while the movement gap can be sealed by providing a seal ring. When the first valve core 20 is closed, the first valve core 20 squeezes the seal ring at the first flow passage port 11, thereby forming a seal.

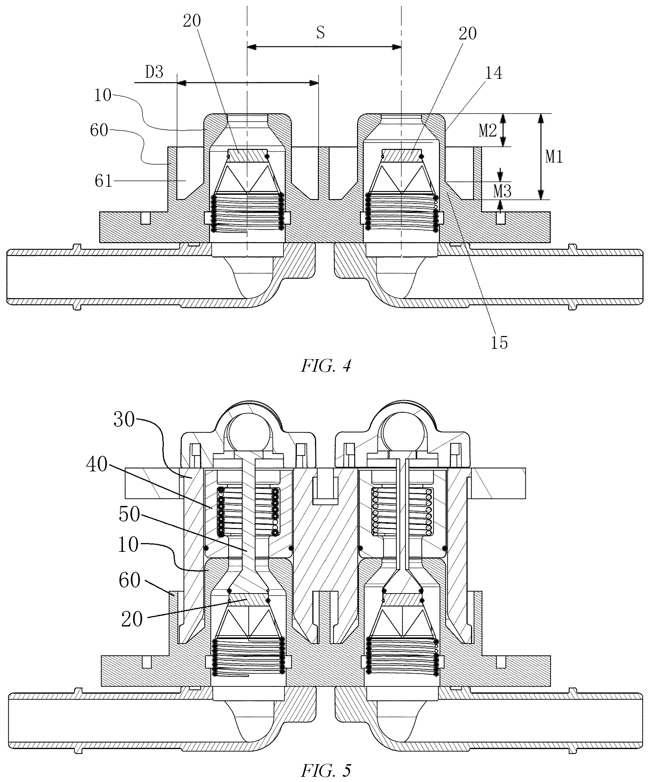

As shown in FIGS. 4 and 5, two first valve bodies 10 are provided. The two first valve bodies 10 are spaced apart from each other, one first valve core 20 is arranged in each of the first valve bodies 10, and a distance between two adjacent first valve cores 20 is defined as S, where P1/S has a value in the range of 0.24 to 0.32.

In the quick-swap connector of the disclosure, P1/S has a value in the range of 0.24 to 0.32. In this embodiment, S is the distance between two adjacent first valve cores 20, and P1 is the outer diameter of the first valve core 20. At a reasonable ratio of the two, the quick-swap connector can obtain excellent performance data. The simulation data is as follows:

| P1/S | Flow rate lpm | Pressure drop kPa |
|---|---|---|
| 0.22 | 18 | 22.1 |
| 0.24 | 18 | 14.5 |
| 0.28 | 18 | 10.7 |
| 0.32 | 18 | 13.2 |
| 0.34 | 18 | 15.7 |

As can be seen from the simulation data, when the value of P1/S is between 0.24 and 0.32, the distance between the two first valve cores 20 is relatively large, so that the inner diameter of the first valve body 10 can be relatively large. Therefore, the pressure drop during passage of the cooling water is relatively small. When the value of P1/S is 0.28, the overall pressure drop is minimized. When P1/S decreases to 0.22, it means that the flow passage area of the first flow passage port 11 is greatly reduced, resulting in a relatively large flow resistance of the cooling water flowing through the first flow passage port 11, and a relatively large overall pressure drop, reaching a non-usable state. When P1/S increases to 0.34, it means that the size ratio of the first valve core 20 to the first valve body 10 is too large, resulting in a too small space for the cooling water to flow through the first flow passage channel 12, and the resistance encountered by the cooling water during passage is relatively large, resulting in a relatively overall pressure drop, reaching a non-usable state. In the quick-swap connector of the disclosure, by adjusting the relationship between the distance between two adjacent first valve cores 20 and the size of the first valve core 20, under the condition of size limitations, the flow resistance of the cooling water is made smaller when flowing through the first valve body 10, thereby taking both the size and the flow resistance into consideration and improving the heat dissipation efficiency.

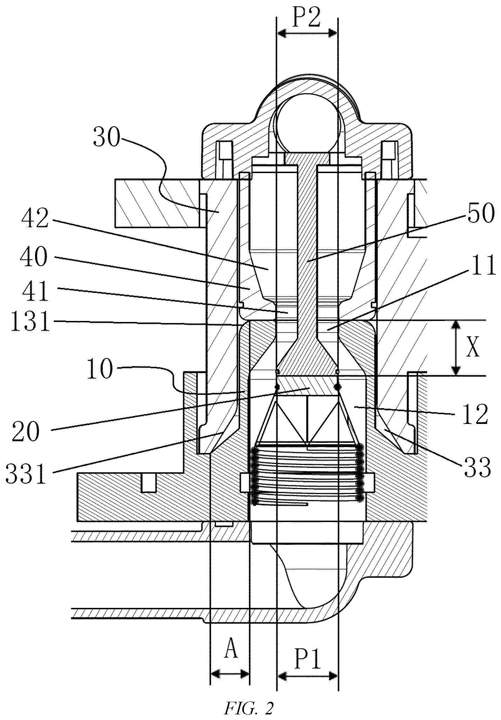

It should be noted that, as shown in FIG. 2, the first valve core 20 has a first position in which the first flow passage port 11 is closed and a second position in which the first flow passage port 11 is opened, and a spring is provided between the first valve core 20 and the first valve body 10. When subjected to an external force, the first valve core 20 is moved to the second position, to open the first flow passage port 11, and the spring is compressed at the same time. When the external force disappears, the first valve core 20 is restored to the first position by the spring, thereby closing the first flow passage port 11. The first valve core 20 moves from the second position to the first position by a distance X, where P1/X has a value in the range of 0.75 to 1.07.

In the quick-swap connector of the disclosure, P1/X has a value in the range of 0.75 to 1.07. In this embodiment, X is the distance by which the first valve core 20 moves from the second position to the first position, and P1 is the outer diameter of the first valve core 20. At a reasonable ratio of the two, the quick-swap connector can obtain excellent performance data. The simulation data is as follows:

| P1/X | Flow rate lpm | Pressure drop kPa |
|---|---|---|
| 0.66 | 15 | 11.2 |
| 0.75 | 15 | 11.2 |
| 0.99 | 15 | 11.7 |
| 1.07 | 15 | 12 |
| 1.26 | 15 | 22 |

As can be seen from the simulation data, when the value of P1/X is between 0.75 and 1.07, the overall pressure drop is relatively small and the gain is greatest. When the value of P1/X is 0.99, the flow passage area between the first valve body 10 and the first valve body 10 is substantially the same as the flow passage area of the first flow passage port 11, so that the resistance encountered by the cooling water when flowing through the first valve core 20 is substantially the same as the flow resistance encountered by the cooling water when flowing through the first flow passage port 11, and the overall pressure drop is relatively small. As the value continues to decrease, the value pressure drop gain is not significant, but X increases, resulting in increased weight and volume. When Q/X decreases to 0.66, there is no gain in the flow resistance, but the volume and the cost are increased. When Q/X increases to 1.26, the two flow passage areas decrease, and the pressure drop increases rapidly to 22 kPa, reaching a non-usable condition. In the quick-swap connector of the disclosure, by adjusting the relationship between the distance between two adjacent first valve cores 20 and the size of the first valve core 20, under the condition of size limitations, the flow resistance of the cooling water is made smaller when flowing through the first valve body 10, thereby taking both the size and the flow resistance into consideration and improving the heat dissipation efficiency.

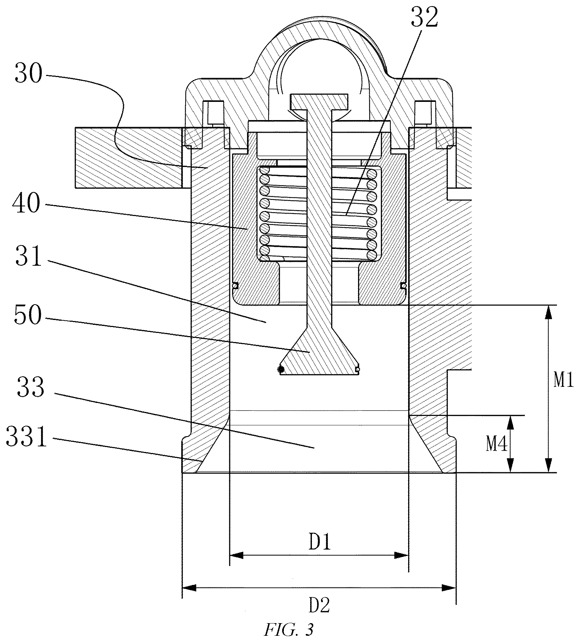

As shown in FIGS. 2 and 3, there is also disclosed a quick-swap connector for use with the first valve body 10 described above. The quick-swap connector includes a second valve body 30, a collar 40 and a second valve core 50. The second valve body 30 has a plug-in cavity 31 and a flow passage cavity 32 which are in communication with each other, and the second valve body 30 is provided with a plug-in opening 33. The plug-in cavity 31 is in communication with the plug-in opening 33. The collar 40 is movably arranged in the flow passage cavity 32, the collar 40 is provided with a second flow passage port 41, and the collar 40 has a second flow passage channel 42 in communication with the second flow passage port 41. The second valve core 50 is fixedly arranged in the second valve body 30, the second valve core 50 runs through the second flow passage channel 42, and the collar 40 is sealingly engaged with or disengaged from the second valve core 50 by means of movement, to close or open the second flow passage port 41. The second valve core 50 has an outer diameter of P2, and the plug-in cavity 31 has an inner diameter of D1, where P2/D1 has a value in the range of 0.71 to 0.77.

In the quick-swap connector of the disclosure, P2/D1 has a value in the range of 0.71 to 0.77. In this embodiment, D1 is the inner diameter of the plug-in cavity 31, and P2 is the outer diameter of the second valve core 50. At a reasonable ratio of the two, the quick-swap connector can obtain excellent performance data. The simulation data is as follows:

| P2/D1 | Flow rate lpm | Pressure drop kPa |
|---|---|---|
| 0.69 | 18 | 15.65 |
| 0.71 | 18 | 13.15 |
| 0.74 | 18 | 10.73 |
| 0.77 | 18 | 14.50 |
| 0.78 | 18 | 22.11 |

As can be seen from the simulation data, when the value of P2/D1 has a value in the range of 0.71 to 0.77, the spacing between the second valve core 50 and an inner wall of the plug-in cavity 31 is relatively large, so that the size of the first valve body 10 can be larger. With the wall thickness of the first valve body 10 and the size of the first valve core 20 being constant, the size of the first flow passage channel 12 can be increased by appropriately increasing the size of the first valve body 10, and the resistance generated by the cooling water passing through the first valve body 10 can be reduced, so that the pressure drop is relatively small. When the value of P2/D1 is 0.74, the overall pressure drop is minimized. When P2/D1 decreases to 0.69, it means that the second valve core 50 is too small and the inner diameter of the flow passage cavity 32 is too large, so that not only the cost increases, but also the main factor determining the overall pressure drop has become the size of the second flow passage port 41 engaged with the second valve core 50. In this case, it is not possible to reduce the flow resistance by continuing to increase the size of the plug-in cavity 31; When P2/D1 increases to 0.78, it means that the second valve core 50 is too large and the inner diameter of the flow passage cavity 32 is too small, so that the main factor determining the overall pressure drop has become the size of the first flow passage channel 12. In this case, it is not possible to reduce the flow resistance by continuing to increase the size of the second valve core 50. In the quick-swap connector of the disclosure, by adjusting the relationship between the inner diameter of the plug-in cavity 31 and the size of the second valve core 50, under the condition of size limitations, the inner diameter of the plug-in cavity 31 and the size of the second valve core 50 can be optimized, and the flow resistance of the cooling water is made smaller when flowing through the first valve core 20 and the second valve core 50, thereby taking both the size and the flow resistance into consideration and improving the heat dissipation efficiency.

It should be noted that in this embodiment, the second valve core 50 has a maximum outer diameter of P2, where P2 has a size range of 13.8 to 15.5mm.

Further, the second valve body 30 has an outer diameter of D2, where D1/D2 has a value in the range of 0.42 to 0.54. By taking the value of D1/D2 in the range of 0.42 to 0.54 for the second valve body 30, it is possible to ensure that there is sufficient thickness between the inner and outer diameters to form a guide structure, so as to facilitate the guiding during plugging of the first valve body 10, thereby improving the assembly efficiency and fault tolerance.

It should be noted that the second valve body 30 is provided with a plug-in opening 33, and a plug-in end 13 of the first valve body 10 is inserted into the second valve body 30 through the plug-in opening 33. The plug-in end 13 of the first valve body 10 has an outer diameter gradually decreasing in a plug-in direction of the first valve body 10, and an outer peripheral wall of the plug-in end 13 of the first valve body 10 forms a first guide surface 131. The plug-in opening 33 of the second valve body 30 has an inner diameter gradually increasing in the opposite direction of the plug-in direction of the first valve body 10, and an inner peripheral wall of the plug-in opening 33 of the second valve body 30 forms a second guide surface 331. During plugging of the first valve body 10 into the second valve body 30, the first guide surface 131 and the second guide surface 331 cooperate with each other to guide the first valve body 10 into the second valve body 30.

Further, a chamfer between an inner diameter of the second valve body 30 and the outer diameter of the second valve body 30 has a dimension of M4, where M4 has a value in the range of 10mm to 12 mm. As shown in FIG. 3, when M4 has a value in the range of 10mm to 12 mm, the curve formed by the second guide surface 331 is relatively smooth, which can better facilitate the guiding of the first valve body 10 during the plugging of the first valve body 10, thereby improving the smoothness during the plugging. Still further, the difference between the minimum outer diameter of the plug-in end 13 of the first valve body 10 and the maximum inner diameter of the plug-in opening 33 of the second valve body 30 is defined as A, where A has a value in the range of 5.5 mm to 9.5 mm. By taking the value of A in the range of 5.5 mm to 9.5 mm, it can be ensured that there is sufficient fault tolerance when the first valve body 10 is plugged into the second valve body 30, thereby improving the plugging success rate.

The disclosure also discloses a quick-swap connector assembly, including the quick-swap connector described above. In particular, the quick-swap connector assembly includes a first valve body 10, a first valve core 20, a second valve body 30, a collar 40 and a second valve core 50. The first valve body 10 is provided with a first flow passage port 11, and a first flow passage channel 12 in communication with the first flow passage port 11 is provided in the first valve body 10. The first valve core 20 is movably arranged in the first flow passage channel 12, and the first valve core 20 is sealingly engaged with or disengaged from the first valve body 10 by means of movement, to close or open the first flow passage port 11. The second valve body 30 is in plug-in engagement with the first valve body 10. The collar 40 is movably arranged in the second valve body 30, the collar 40 is provided with a second flow passage port 41, the collar 40 has a second flow passage channel 42 in communication with the second flow passage port 41, and the annular sleeve 60 is elastically connected to the second valve body 30 via a spring, thereby achieving elastic expansion and contraction. The second valve core 50 is fixedly arranged in the second valve body 30, the second valve core 50 runs through the second flow passage channel 42, and the second valve core 50 is sealingly engaged with the collar 40 to close the second flow passage port 41.

During the plug-in engagement of the first valve body 10 with the second valve body 30, the first valve body 10 abuts against the collar 40, the second flow passage port 41 is positioned corresponding to the first flow passage port 11, and the second valve core 50 abuts against the first valve core 20 at the same time. When continuing to be plugged into the assembly position, the first valve body 10 pushes the collar 40 to move, such that the collar 40 is disengaged from the second valve core 50, the second flow passage port 41 is opened. At the same time, the second valve core 50 enters the first flow passage port 11 and pushes the first valve core 20 to move, such that the first valve core 20 is disengaged from the first valve body 10, and the first flow passage port 11 is opened, so that the first flow passage port 11 is in communication with the second flow passage port 41, to realize the circulation of the cooling water.

When the first valve body 10 is disengaged from the second valve body 30, the first valve core 20 is restored under the action of the spring, to close the first flow passage port 11, and the collar 40 is also restored under the action of its own spring, to close the second flow passage port to prevent leakage of the cooling water.

In the quick-swap connector of the disclosure, in order to reduce flow resistance, the first valve core 20 has an outer diameter of P1 and the second valve core 50 has an outer diameter P2, where P2/P1 has a value in the range of 0.8 to 1. P1 is the outer diameter of the first valve core 20 and P2 is the outer diameter of the second valve core 50. At a reasonable ratio of the two, the quick-swap connector can obtain excellent performance data. The simulation data is as follows:

| P2/D1 | Flow rate lpm | Pressure drop kPa |
|---|---|---|
| 0.75 | 18 | 12.03 |
| 0.8 | 18 | 11.65 |
| 0.98 | 18 | 10.73 |
| 1 | 18 | 10.21 |

During coupling, since the second valve core 50 enters the first flow passage port 11 and pushes the first valve core 20 to move, the size of the second valve core 50 cannot exceed the size of the first valve core 20. In order to facilitate entering the **first flow** passage port 11, the size of the second valve core 50 may be made slightly smaller than the size of the first valve core 20 so that there is a sufficient movement gap between the second valve core and the first flow passage port 11, but the size of the second valve core 50 cannot be too small. When P2/P1 < 0.8, the size of the second valve core 50 is too small, and therefore there is a sudden change in diameter at a connecting surface thereof when engaged with the first valve core 20. As a result, the pressure drop increases, and the rebound force also increases at the time of the disengagement of the first valve core 20, affecting the sealing performance, so that setting the value of P2/P1 in the range of 0.8 to 1 can guarantee the sealing performance while ensuring a relatively small pressure drop, and the relative movement between the second valve core 50 and the first flow passage port 11 will also not be affected, making the use process smoother.

In the above embodiment, the second valve body 30 has a plug-in cavity 31 and a flow passage cavity 32 which are in communication with each other. The plug-in cavity 31 is configured to be in plug-in engagement with the first valve body 10, the first valve body 10 is located in the plug-in cavity 31, the collar 40 is arranged in the flow passage cavity 32. The second valve body 30 is provided with a plug-in opening 33, and a plug-in end 13 of the first valve body 10 is inserted into the plug-in cavity 31 through the plug-in opening 33. The plug-in end 13 of the first valve body 10 has an outer diameter gradually decreasing in a plug-in direction of the first valve body 10, and an outer peripheral wall of the plug-in end 13 of the first valve body 10 forms a first guide surface 131. The plug-in opening 33 of the second valve body 30 has an inner diameter gradually increasing in the opposite direction of the plug-in direction of the first valve body 10, and an inner peripheral wall of the plug-in opening 33 of the second valve body 30 forms a second guide surface 331. During plugging of the first valve body 10 into the second valve body 30, the first guide surface 131 and the second guide surface 331 cooperate with each other to guide the first valve body 10 into the second valve body 30.

In order to ensure the plugging stability of the first valve body 10 and the second valve body 30, a plug-in depth of the first valve body 10 into the second valve body 30 is defined as M1, where M1 has a value in the range of 24.5mm to 39 mm.

An annular sleeve 60 is provided on an outer peripheral wall of the first valve body 10. The annular sleeve 60 is connected to the outer peripheral wall of the first valve body 10 to form a plug-in slot 61, the first valve body 10 is plugged into the second valve body 30 and at the same time, the second valve body 30 is inserted into the plug-in slot 61. By providing the annular sleeve 60 and forming the plug-in slot 61 with the outer peripheral wall of the first valve body 10, a limiting structure can be formed after the first valve body 10 is plugged into the second valve body 30, to ensure the plugging stability and reliability of the first valve body 10 and the second valve body 30. Preferably, the first valve body 10 has an exposed section 14 extending to the outside of the annular sleeve 60. The exposed section 14 of the first valve body 10 has a length of M2 for convenience of plugging, where M2 has a value in the range of 19.7 to 39 mm, so that the first valve body 10 has a sufficient length to be in plug-in engagement with the second valve body 50. The first valve body 10 further has a connecting section 15 connected to the annular sleeve 60, and an outer surface of the first valve body 10 at the connecting section 15 is connected to the bottom of the plug-in slot 61. In order to improve the robustness of the first valve body 10, the connecting section 15 of the first valve body 10 has an outer diameter gradually increasing in a plug-in direction of the second valve body 30, and the connecting section 15 of the first valve body 10 has a length of M3, where M3 has a value in the range of 6 to 10 mm, so that the size is made more reasonable while ensuring the reliability. Further, the annular sleeve 60 has an inner diameter of D3, where D3 has a value in the range of 41 to 45 mm, so that the annular sleeve can be better engaged with the second valve body 30, making the first valve body 10 and the second valve body 30 more secure and reliable after plug-in engagement.

The disclosure also discloses an electric vehicle, including the cooling water system described above.

Unless otherwise indicated specifically, the relative arrangement, numerical expressions and values of the components and steps set forth in these embodiments do not limit the scope of the disclosure. In addition, it should be understood that, for ease of description, the dimensions of the various parts shown in the accompanying drawings are not drawn according to the actual proportional relationship. Techniques, methods and devices known to those of ordinary skill in the relevant field may not be discussed in detail, but where appropriate, the techniques, methods and devices should be considered as part of the authorized description. In all of the examples shown and discussed here, any specific value should be construed as merely exemplary but not limiting. Therefore, other examples of exemplary embodiments may have different values. It should be noted that similar reference signs and letters refer to similar items in the following drawings. Therefore, once an item is defined in one of the drawings, it is not necessary to further discuss the item in subsequent drawings.

For ease of description, spatial relative terms such as "over ...", "above ...", "on an upper surface of ...", and "on ..." may be used here to describe a spatial position relationship between one device or feature and another device or feature as shown in the figures. It should be understood that the spatial relative terms are intended to encompass different orientations of the device in use or operation, in addition to the orientation of the device described in the figure. For example, if devices in the figure are inverted, the device described as "above" or "over" another device or structure will later be positioned as "below" or "under" another device or structure. Therefore, the exemplary term "above ..." may include both "above ..." and "below ..." orientations. The device may also be positioned in other different ways (rotated by 90 degrees or in other orientations), and the spatial relative descriptions used here are interpreted accordingly.

In the description of the disclosure, it should be understood that orientations or position relationships indicated by orientation terms such as "front, rear, up, down, left, and right", "transverse, vertical, perpendicular, and horizontal", and "top and bottom" are generally based on orientations or position relationships shown in the drawings and are merely for ease of description of the disclosure and simplification of the description, rather than indicating and implying that the apparatuses or elements referred to must have a specific orientation or be constructed and operated in a specific orientation if there is no explanation to the contrary, and therefore cannot be construed as limiting the scope of protection of the disclosure. The orientation terms "interior and exterior" refer to inside and outside relative to a contour of each component itself.

Heretofore, the technical solutions of the disclosure have been described with reference to the preferred implementations shown **in** the accompanying drawings. However, those skilled **in** the art can readily understand that the scope of protection of the disclosure is apparently not limited to these specific implementations. Without departing from the principles of the disclosure, those skilled **in** the art may make equivalent changes or replacements to related technical features. The technical solutions obtained after these changes or replacements fall within the scope of protection of the disclosure.

## Claims

1. A quick-swap connector, comprising:
a first valve body (10), the first valve body (10) being provided with a first flow passage port (11), and a first flow passage channel (12) in communication with the first flow passage port (11) being provided in the first valve body (10); and
a first valve core (20), the first valve core (20) being movably arranged in the first flow passage channel (12), and the first valve core (20) being sealingly engaged with or disengaged from the first valve body (10) by means of movement, to close or open the first flow passage port (11), wherein
the first valve body (10) has an outer diameter of D11, and the first valve core (20) has an outer diameter of P1, where D11/P1 has a value in the range of 1.55 to 1.74.

2. The quick-swap connector according to claim 1, wherein
the first valve body (10) has an inner diameter of D21, where D21/P1 has a value in the range of 1.3 to 1.4.

3. The quick-swap connector according to claim 1, wherein
the first flow passage port (11) has an inner diameter of Q1, where Q1/P1 has a value in the range of 1.02 to 1.03.

4. The quick-swap connector according to claim 1, wherein
two first valve bodies (10) are provided, the two first valve bodies (10) being spaced apart from each other, one first valve core (20) is arranged in each of the first valve bodies (10), and a distance between two adjacent first valve cores (20) is defined as S, where P1/S has a value in the range of 0.24 to 0.32.

5. The quick-swap connector according to claim 1, wherein
the first valve core (20) has a first position in which the first flow passage port (11) is closed and a second position in which the first flow passage port (11) is opened; and
the first valve core (20) moves from the second position to the first position by a distance X, where P1/X has a value in the range of 0.75 to 1.07.

6. The quick-swap connector according to any one of claims 1 to 5, wherein
the outer diameter P1 of the first valve core (20) has a size range of 11.9 mm to 15.9 mm.

7. A quick-swap connector assembly, comprising a quick-swap connector of any one of claims 1 to 6.

8. The quick-swap connector assembly according to claim 7, further comprising:
a second valve body (30), the second valve body (30) being in plug-in engagement with the first valve body (10);
a collar (40), the collar (40) being movably arranged in the second valve body (30), the first valve body (10) abutting against the collar (40), the collar (40) being provided with a second flow passage port (41), the second flow passage port (41) being positioned corresponding to the first flow passage port (11), and the collar (40) having a second flow passage channel (42) in communication with the second flow passage port (41); and
a second valve core (50), the second valve core (50) being fixedly arranged in the second valve body (30), the second valve core (50) running through the second flow passage channel (42), the second valve core (50) abutting against the first valve core (20), and the collar (40) being sealingly engaged with or disengaged from the second valve core (50) by means of movement, to close or open the second flow passage port (41), wherein
the second valve core (50) has an outer diameter of P2, where P2/P1 has a value in the range of 0.8 to 1.

9. The quick-swap connector assembly according to claim 8, wherein
the second valve body (30) has a plug-in cavity (31) and a flow passage cavity (32) which are in communication with each other, wherein the plug-in cavity (31) is configured to be in plug-in engagement with the first valve body (10), the first valve body (10) is located in the plug-in cavity (31), the collar (40) is arranged in the flow passage cavity (32), and the plug-in cavity (31) has an inner diameter of D1, where P2/D1 has a value in the range of 0.71 to 0.77.

10. The quick-swap connector assembly according to claim 9, wherein
the second valve body (30) has an outer diameter of D2, where D1/D2 has a value in the range of 0.42 to 0.54.

11. The quick-swap connector assembly according to claim 10, wherein
a chamfer between an inner diameter of the second valve body (30) and the outer diameter of the second valve body (30) has a dimension of M4, where M4 has a value in the range of 10mm to 12 mm.

12. The quick-swap connector assembly according to claim 8, wherein
the second valve body (30) is provided with a plug-in opening (33), and a plug-in end (13) of the first valve body (10) is inserted into the second valve body (30) through the plug-in opening (33);
the plug-in end (13) of the first valve body (10) has an outer diameter gradually decreasing in a plug-in direction of the first valve body (10), and an outer peripheral wall of the plug-in end (13) of the first valve body (10) forms a first guide surface (131);
the plug-in opening (33) of the second valve body (30) has an inner diameter gradually increasing in the opposite direction of the plug-in direction of the first valve body (10), and an inner peripheral wall of the plug-in opening (33) of the second valve body (30) forms a second guide surface (331); and
during plugging of the first valve body (10) into the second valve body (30), the first guide surface (131) and the second guide surface (331) cooperate with each other to guide the first valve body (10) into the second valve body (30).

13. The quick-swap connector assembly according to claim 12, wherein
the difference between the minimum outer diameter of the plug-in end (13) of the first valve body (10) and the maximum inner diameter of the plug-in opening (33) of the second valve body (30) is defined as A, where A has a value in the range of 5.5 mm to 9.5 mm.

14. The quick-swap connector assembly according to claim 8, wherein
a plug-in depth of the first valve body (10) into the second valve body (30) is defined as M1, where M1 has a value in the range of 24.5mm to 39 mm.

15. The quick-swap connector assembly according to claim 8, wherein
an annular sleeve (60) is provided on an outer peripheral wall of the first valve body (10), the annular sleeve (60) being connected to the outer peripheral wall of the first valve body (10) to form a plug-in slot (61), the first valve body (10) is plugged into the second valve body (30) and at the same time, the second valve body (30) is inserted into the plug-in slot (61).

16. The quick-swap connector assembly according to claim 15, wherein
the first valve body (10) has an exposed section (14) extending to the outside of the annular sleeve (60), the exposed section (14) of the first valve body (10) having a length of M2, where M2 has a value in the range of 19.7mm to 39 mm.

17. The quick-swap connector assembly according to claim 15, wherein
the first valve body (10) further has a connecting section (15) connected to the annular sleeve (60), and an outer surface of the first valve body (10) at the connecting section (15) is connected to the bottom of the plug-in slot (61); and
the connecting section (15) of the first valve body (10) has an outer diameter gradually increasing in a plug-in direction of the second valve body (30), and the connecting section (15) of the first valve body (10) has a length of M3, where M3 has a value in the range of 6mm to 10 mm.

18. The quick-swap connector assembly according to claim 15, wherein
the annular sleeve (60) has an inner diameter of D3, where D3 has a value in the range of 41mm to 45 mm.

19. A quick-swap connector, comprising:
a second valve body (30), the second valve body (30) having a plug-in cavity (31) and a flow passage cavity (32) which are in communication with each other, the second valve body (30) being provided with a plug-in opening (33), and the plug-in cavity (31) being in communication with the plug-in opening (33);
a collar (40), the collar (40) being movably arranged in the flow passage cavity (32), the collar (40) being provided with a second flow passage port (41), and the collar (40) having a second flow passage channel (42) in communication with the second flow passage port (41); and
a second valve core (50), the second valve core (50) being fixedly arranged in the second valve body (30), the second valve core (50) running through the second flow passage channel (42), and the collar (40) being sealingly engaged with or disengaged from the second valve core (50) by means of movement, to close or open the second flow passage port (41), wherein
the second valve core (50) has an outer diameter of P2, and the plug-in cavity (31) has an inner diameter of D1, where P2/D1 has a value in the range of 0.71 to 0.77.

20. The quick-swap connector according to claim 19, wherein
the second valve body (30) has an outer diameter of D2, where D1/D2 has a value in the range of 0.42 to 0.54.

21. The quick-swap connector according to claim 20, wherein
a chamfer between an inner diameter of the second valve body (30) and the outer diameter of the second valve body (30) has a dimension of M4, where M4 has a value in the range of 10mm to 12 mm.

22. The quick-swap connector according to any one of claims 19 to 21, wherein
the second valve core (50) has a maximum outer diameter of P2, where P2 has a size range of 13.8mm to 15.5mm.

23. A quick-swap connector assembly, comprising a quick-swap connector of any one of claims 19 to 22.

24. A cooling water system, comprising a quick-swap connector assembly of any one of claims 7 to 18 and 23.

25. An electric vehicle, comprising a cooling water system of claim 24.
